(19) Europäisches Patentamt
European Patent Office
Office européen des brevets

(11) Veröffentlichungsnummer: **0 115 633**
**A1**

# (12) EUROPÄISCHE PATENTANMELDUNG

(21) Anmeldenummer: 83113115.6

(22) Anmeldetag: 27.12.83

(51) Int. Cl.³: C 08 F 251/02, C 08 L 1/10, G 02 C 7/04 // (C08F251/02, 220/26), (C08L1/10, 31/04, 33/06)

(30) Priorität: 07.01.83 DE 3300345

(43) Veröffentlichungstag der Anmeldung: 15.08.84 Patentblatt 84/33

(84) Benannte Vertragsstaaten: BE CH DE FR GB IT LI NL

(71) Anmelder: BAYER AG, Konzernverwaltung RP Patentabteilung, D-5090 Leverkusen 1 Bayerwerk (DE)

(72) Erfinder: Wingler, Frank, Dr., Walter-Flex-Strasse 17, D-5090 Leverkusen 1 (DE)

(54) **Hydrophilierte Celluloseester, Verfahren zu deren Herstellung, deren Verwendung als biomedizinische Materialien und hieraus hergestellte Kontaktlinsen und -schalen.**

(57) Polymerblend, bestehend aus

(A) 98–80 Gew.-% eines Celluloseesters einer aliphatischen Carbonsäure, der gegebenenfalls bis zu 40 Gew.-%, bezogen auf gesamte Komponente (A), eines Ethylen-Vinylacetat-Copolymeren mit 30 bis 98 Gew.-%, bezogen auf EVA, eingebautem Vinylacetat enthält und

(B) 2–20 Gew.-% eines Homo- oder Copolymerisats aus wasserlöslichen Vinylmonomeren sowie gegebenenfalls bis zu 10 Gew.-%, bezogen auf das gesamte Polymerisat (B), an mehrfunktionellen Vinylverbindungen als Vernetzer,

und hieraus hergestellte, mit lebendem Gewebe in Kontakt kommende Materialien für die Tier- und Humanmedizin, insbesondere die Kontaktoptik.

EP 0 115 633 A1

0115633

BAYER AKTIENGESELLSCHAFT 5090 Leverkusen, Bayerwerk

Zentralbereich
Patente, Marken und Lizenzen Sft/bc/c

# Hydrophilierte Celluloseester, Verfahren zu deren Herstellung, deren Verwendung als biomedizinische Materialien und hieraus hergestellte Kontaktlinsen und -schalen

Die Erfindung betrifft hydrophilierte Polymere auf Basis von Celluloseestern aliphatischer Carbonsäuren. Die erfindungsgemäße Hydrophilierung erfolgt, indem man die Celluloseester, gegebenenfalls in Form von Blends mit Ethylen-Vinylacetat-Copolymeren, in fester Phase oder in der Schmelze mit wasserlöslichen Vinylmonomeren imprägniert und anschließend die Vinylmonomeren unter Wärme- und/oder Lichteinwirkung, gegebenenfalls unter Zuhilfenahme von Radikalinitiatoren, polymerisiert. Die Erfindung betrifft weiterhin die Verwendung solcher hydrophilierter Materialien in der Human- oder Tiermedizin als biomedizinische Materialien, insbesondere in der Augen-Kontaktoptik.

In der Humanmedizin wird bereits eine Reihe von verschiedenen hydrophilen Polymeren mit Wasseraufnahmevermögen von 1 bis etwa 60 Gew.-% eingesetzt, z.B. als Implantate oder als lichtbrechende Materialien

in der Kontaktoptik. Unter anderem werden in diesem Zusammenhang Weichgele aus vernetzten (Meth)acrylsäure-oxialkylester-Polymerisaten oder Copolymerisaten mit Vinylpyrrolidon, Acrylsäure, Methacrylsäure, Acrylamid, Methacrylsäureamid oder Methacrylsäure-alkylsilylester verwendet. Weichgele haben jedoch den Nachteil, daß sie in ihrem Netzwerk Metabolite, infektionsauslösende Substanzen etc. speichern können. Das hat dazu beigetragen, daß in der Kontaktoptik verstärkt anstelle dieser Weichgele halbharte Materialien aus Celluloseacetobutyrat bzw. Blends mit Ethylen-Vinylacetat-Copolymeren (EVA) eingesetzt wurden, wie es z.B. in der EP 0 013 366 beschrieben ist. Das Wasseraufnahmevermögen von Celluloseestern bzw. deren Blends mit EVA liegt je nach freiem OH-Gehalt bei ca. 1 bis 2 %; die Benetzbarkeit mit Wasser ist mäßig. Für eine bessere Verträglichkeit mit lebendem Gewebe im humanbiomedizinischen Bereich wäre eine bessere Benetzbarkeit, mit anderen Worten eine stärkere Hydrophilie von großem Nutzen. Da solche Materialien besonders für die Kontaktoptik interessant sind, wäre es wünschenswert, wenn die Materialien gleichzeitig auch eine hohe Lichtdurchlässigkeit besitzen.

Aufgabe der vorliegenden Erfindung war demnach, die Hydrophilie oder Benetzbarkeit mit Wasser von biomedizinischen Materialien auf Basis von Celluloseestern aliphatischer Carbonsäuren bzw. deren Blends mit EVA zu verbessern unter Erhalt der Lichtdurchlässigkeit. Die Aufgabe wurde gelöst, indem man das Material in fester Form oder in der Schmelze mit 2 bis 20 Gew.-% eines

oder mehrerer wasserlöslicher Vinylmonomeren, gegebenenfalls unter Zusatz von 0,01 bis 0,5 Gew.-% eines bei Vinylpolymerisationen die Polymerisation auslösenden Radikalinitiators, imprägniert und anschließend das imprägnierte Material in fester Form oder Schmelze einer Temperatur von 60 bis 220°C und/oder einer Lichteinwirkung aussetzt.

Gegenstand der vorliegenden Erfindung sind Polymerblends, bestehend aus

(A) 98-80 Gew.-% eines Celluloseesters einer aliphatischen Carbonsäure, der gegebenenfalls bis zu 40 Gew.-%, bezogen auf gesamte Komponente (A), eines Ethylen-Vinylacetat-Copolymeren mit 30-98 Gew.-%, bezogen auf EVA, eingebautem Vinylacetat enthält und

(B) 2-20 Gew.-% eines Homo- oder Copolymerisats aus wasserlöslichen Vinylmonomeren sowie gegebenenfalls bis zu 10 Gew.-%, bezogen auf das gesamte Polymerisat (B), an mehrfunktionellen Vinylverbindungen als Vernetzer,

wobei die Monomeren von (B) in fester Phase oder in der Schmelze in (A) polymerisiert worden sind.

Gegenstand der Erfindung sind auch aus den erfindungsgemäßen Polymerblends hergestellte Kontaktlinsen und -schalen.

Erfindungsgemäß bevorzugt wird als Komponente (A) der Celluloseester allein oder als Blend mit 1 bis 30 Gew.-%, insbesondere 5 bis 15 Gew.-% EVA, eingesetzt.

Es ist als überraschend anzusehen, daß bei der erfindungsgemäßen Hydrophilierung verträgliche, keine Lichtstreuung (auch nicht im hydratisierten Zustand) verursachende Materialien erhalten werden; ja daß sogar durch die Hydrophilierung die Streulichtanteile in Komponente (A) verringert werden. Mischungen aus getrennt hergestellten Komponenten (A) und Polymerisaten vom Typ (B) sind unverträglich. Dies zeigt sich im Abfall der mechanischen Festigkeit und durch Trübung und Lichtstreuung vor allem im hydratisierten Zustand.

Geeignete Celluloseester zur Herstellung der erfindungsgemäßen Materialien sind Celluloseester aliphatischer Carbonsäuren mit 1 bis 5 C-Atomen, vorzugsweise Cellulose-acetat, -acetopropionat und -acetobutyrat.

Organische Celluloseester sind seit langem bekannt und werden beispielsweise in Ullmanns Enzyklopädie der technischen Chemie (Verlag Urban und Schwarzenberg, München-Berlin, 1963) im 5. Band auf S. 182-201 beschrieben. Geeignete Celluloseacetobutyrate enthalten z.B.

30 bis 50 Gew.-% Buttersäure,
10 bis 26 Gew.-% Essigsäure und
0,7 bis 1,95 Gew.-% Hydroxylgruppen.

Bevorzugt ist die Verwendung von Celluloseacetobutyraten mit folgender Zusammensetzung:

35 bis 47 Gew.-% Buttersäure,
15 bis 21 Gew.-% Essigsäure und
0,8 bis 1,7 Gew,-% Hydroxylgruppen.

Geeignete Celluloseacetopropionate enthalten z.B.

30 bis 63,5 Gew.-% Propionsäure,
1 bis 12 Gew.-% Essigsäure und
1,2 bis 1,95 Gew.-% Hydroxylgruppen.

Bevorzugt haben Celluloseacetopropionate folgende Zusammensetzung:

40 bis 60 Gew.-% Propionsäure,
3 bis 8 Gew.-% Essigsäure und
1,5 bis 1,8 Gew.-% Hydroxylgruppen.

Die relativen Viskositäten ($\eta_{rel}$) von 2 %igen Lösungen der verwendeten aliphatischen Celluloseester in Aceton liegen bei 25°C vorzugsweise zwischen 3,5 und 5,0, besonders bevorzugt zwischen 4,0 und 4,5.

Die erfindungsgemäß als Komponente (A) in Betracht kommenden Blends aus Celluloseestern und EVA sind an sich bekannt (EP 0 003 971 und EP 0 013 366). Die EVA-Copolymerisate können nach den bekannten Verfahren der Hoch- und Mitteldrucksynthese, gegebenenfalls in Lösungsmitteln wie tert.-Butanol, hergestellt werden. Sie haben einen Vinylacetatgehalt von 30 bis 98 Gew.-%, vorzugsweise von 60 bis 80 Gew.-%.

Die nach dem Verfahren der Hochdrucksynthese hergestellten Ethylen-Vinylacetat-Copolymerisate besitzen in der Regel Schmelzindexwerte - nach DIN 53 735 bei 190°C und einer Belastung von 2,16 kp - zwischen 0,1

und 100 g, vorzugsweise zwischen 1,0 und 10 g, insbesondere 4,5 bis 6 g. Die in Tetralin bei 120°C gemessenen Grenzviskositäten liegen im allgemeinen zwischen 0,6 und 1,5 dl/g. Die nach der Methode der Lichtstreung ermittelten Molekulargewichte liegen vorzugsweise zwischen 50 000 und etwa 1 Million. Die nach der Beziehung $(M_w/M_n)-1$ definierte Uneinheitlichkeit U (G. Schulz, Z.phys.Chem. (B) 43 (1939) Seiten 25-34) liegt bevorzugt im Bereich von 1,6 bis 30. Diese Copolymerisate sind bevorzugt in heißen Kohlenwasserstoffen löslich.

Die nach dem Verfahren der Lösungs- oder Emulsionspolymerisation hergestellten Ethylen-Vinylacetat-Copolymerisate, die 30 bis 98 Gew.-% Vinylacetat, vorzugsweise 60 bis 80 Gew.-% Vinylacetat enthalten, besitzen Schmelzindexwerte (190°C - 2,16 kp), die größer als 100 g sein können, vorzugsweise liegt der Schmelzindexbereich jedoch unter 15 g, insbesondere zwischen 0,5 und 5 g. Die mittels Lichtstreuung gemessenen Molekulargewichte liegen vorzugsweise zwischen 40 000 und 1 Million. Die Uneinheitlichkeit U beträgt in der Regel 1 bis 6. Die Copolymerisate sind löslich in Kohlenwasserstoffen und Alkoholen und besitzen vorzugsweise Grenzviskositäten in Toluol zwischen 0,5 und 2,5 dl/g.

Die Ethylen-Vinylacetat-Copolymerisate können, falls gewünscht, ganz oder teilweise verseift sein.

Der bekannte nachteilige Effekt der sogenannten Weichmacherwanderung tritt bei den Polymermischungen aus organischen Celluloseestern und Ethylen-Vinylacetat-Copolymerisaten nicht auf, da bei der Verarbeitung der Mischung der Zusatz von Weichmachern und ähnlichen Hilfsmitteln nicht erforderlich ist. Dadurch sind solche Mischungen besonders gut geeignet für Anwendungen, bei denen es auf physiologische Verträglichkeit ankommt.

Die Herstellung der Blends aus organischen Celluloseestern und Ethylen-Vinylacetat-Copolymerisaten erfolgt durch intensives Vermischen der Komponenten. Es können hierzu alle bekannten Mischverfahren benutzt werden, wie z.B. das Mischen auf Walzwerken oder in Schneckenextrudern. Die erfindungsgemäß zu verwendenden Blends aus organischen Celluloseestern und Ethylen-Vinylacetat-Copolymerisaten lassen sich problemlos auf bekannten Extrudern und Spritzgußmaschinen kontinuierlich und diskontinuierlich zu Granulat bzw. zu Formkörpern wie Linsen, Schläuche oder Gelenkersatzteilen verarbeiten und zeigen dabei eine gute Fließfähigkeit.

Als wasserlösliche Vinylmonomere für die Herstellung des Polymerisats (B) kommen vorzugsweise solche der allgemeinen Formel

$$H_2C=\overset{R}{\overset{|}{C}}-\overset{O}{\overset{\|}{C}}-O-A-OR'$$

in Frage, wobei

R für H oder $CH_3$ steht,

R' H, $CH_3$ oder $C_2H_5$ bedeutet und

A einen gegebenenfalls verzweigten Alkylenrest mit 1 bis 4 C-Atomen darstellt.

Bevorzugte Beispiele für derartige Monomere sind:

Acrylsäure-2-hydroxyethylester, Acrylsäure-2-hydroxypropylester, Acrylsäure-3-hydroxypropylester, Acrylsäure-4-hydroxybutylester, Acrylsäure-methoxymethylester, Acrylsäure-ethoxymethylester, Acrylsäure-2-methoxyethylester, Acrylsäure-2-ethoxyethylester und Methacrylsäure-2-hydroxyethylester.

Ein weiteres erfindungsgemäß bevorzugtes wasserlösliches Vinylmonomer ist Vinylpyrrolidon.

Weitere erfindungsgemäße verwendbare wasserlösliche Monomere sind z.B. Acrylsäure, Methacrylsäure, Acrylamid, Methacrylamid und Diacetonacrylamid.

Das Imprägnieren der Komponente (A) mit den Monomeren, die unter (B) aufgeführt sind, erfolgt in fester Phase durch Aufbringen der Monomeren auf Pulver oder Granulat von (A) und anschließendes Eindiffundieren, gegebenenfalls bei leicht erhöhter Temperatur von 25 bis 80°C und Drücken von Atmosphärendruck bis etwa 3 bar Überdruck. Dabei kann die Mischung in Pulver- oder Granulat-Mischorganen wie Innenmischern oder Taumelmischern gerührt oder getaumelt werden. Eine weitere Möglichkeit besteht in der Imprägnierung in der Schmelze. Dabei wird das Polymer (A) vorzugsweise bei 150 bis etwa 220°C in geeigneten Hochviskosorganen wie Schneckenmaschinen, Knetern etc. aufgeschmolzen und die Monomeren aus der Gruppe (B) unter Druck (z.B. bei etwa 100 bar) zudosiert.

Zur anschließenden Polymerisation können den Monomeren vor ihrem Einbringen in (A) eine Radikalkettenpolymerisation auslösende Initiatoren zugefügt werden. Hierzu gehören Verbindungen, die thermisch in Radikale zerfallen wie Azoverbindungen, Percarbonate, Perketale, Peroxide, Hydroperoxide, verzweigte sterisch gehinderte Kohlenwasserstoffe, Silylverbindungen, symmetrische aliphatische Azoverbindungen wie Azoisobuttersäuredinitril, Azo-bis-2-methylvaleronitril, 1,1'-Azo-bis-1-cyclohexannitril und 2,2'-Azo-bis-isobuttersäurealkylester; Diacylperoxide wie z.B. Acetyl-, Propionyl- oder Butyrylperoxid, Benzoylperoxid und im aromatischen Kern mit 1 bis 2 Chlor-, Brom-, Nitro-, Methyl- oder Methoxyl-Gruppen substituierte Benzoylperoxide, sowie Lauroylperoxid; symmetrische Peroxidicarbonate wie z.B. Diethyl-, Diisopropyl-, Dicyclohexyl- sowie Dibenzylperoxidicarbonat; tert.-Butyl-peroctoat oder tert.-Butylphenylperacetat; sowie Peroxycarbamate wie tert.-Butyl-N-(phenylperoxy)-carbamat oder tert.-Butyl-N-(2,3 oder N-(phenylperoxy))-carbamat oder tert.-Butyl-N-(2,3 oder 4-chlor-phenylperoxy)-carbamat; Dilaurylperoxid, Dibenzoylperoxid, Diacetylperoxid, Dicumylperoxid, Di-tert.-butylperoxid oder Cumolhydroperoxid.

Photoinitiatoren zerfallen bei Einstrahlung von Licht in radikalische, die Polymerisation auslösende Bruchstücke. Geeignete Photoinitiatoren sind beispielsweise Benzoin und Benzoinderivate der allgemeinen Formel (I)

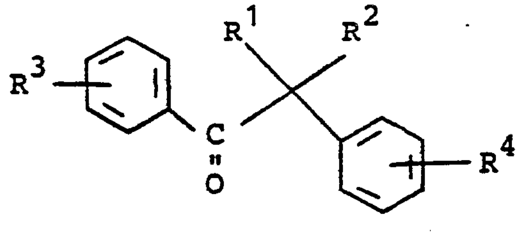

(I)

worin

$R^1$ für -O-Y oder -S-Y steht und

Y Wasserstoff, Trimethylsilyl, $C_1$-$C_{18}$-Alkyl, $C_6$-$C_{15}$-Aryl oder $C_7$-$C_{15}$-Aralkyl bedeutet,

$R^2$ für Wasserstoff, $C_1$-$C_{18}$-Alkyl, $C_6$-$C_{15}$-Aryl, $C_7$-$C_{15}$-Aralkyl, Carboxyl oder $CH_2$-O-Z steht,

Z Wasserstoff oder der Säurerest einer Carbonsäure oder einer Sulfonsäure ist und

$R^3$ und $R^4$ Wasserstoff, $C_1$-$C_4$-Alkyl, Halogen wie F, Cl, Br und J oder -O-R" (R" = $C_1$-$C_{18}$-Alkyl) bedeuten;

Benzophenon und Benzophenonderivate der allgemeinen Formel (II)

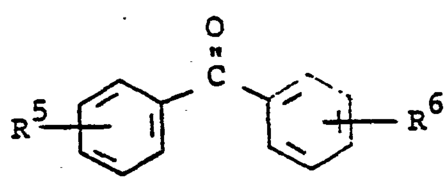 (II)

worin

$R^5$ für $CH_2$-X, CH-$X_2$ oder $CX_3$ steht,

$R^6$ für H, $CH_3$, $CH_2$-X, CH-$X_2$ oder $CX_3$ steht und

X Chlor, Brom oder Jod bedeutet.

Ebenso verwendbar sind auch die übrigen aus der Literatur bekannten Photoinitiatoren, wie aromatische Sulfochloride, Phenacylbromid, aromatische Disulfide oder Anthrachinonderivate.

Weitere Beispiele solcher geeigneter Initiatoren sind in den DE-OS 17 69 168, 17 69 853, 17 69 854, 18 07 297, 18 07 301, 19 19 678, 19 49 010 sowie in der DE-AS 1 694 149 beschrieben (vgl. auch J. Kosar "Light-Sensitive Systems", Wiley-Verlag, New York 1965).

Die Initiatoren können in Mengen von 0,01 bis etwa 0,5 Gew.-% den Monomeren bzw. der Monomermischung zugesetzt sein.

Die Polymerisation erfolgt anschließend in fester oder geschmolzener Phase durch Einwirken von Temperaturen von 25 bis etwa 220°C oder durch Licht, bei Drücken von atmosphärischem Druck bis etwa 100 bar Überdruck. Besonders wirksam ist die Bestrahlung mit sichtbarem oder UV-Licht, z.B. durch die Sonne, künstliche Fluoreszenzröhren oder Quecksilberhochdruck-Brenner.

Die Schmelzpolymerisation erfolgt z.B. in Polymerisationsschnecken oder -Knetern. Die Schmelze wird anschließend zu einem Strang geformt, abgekühlt und granuliert. Es empfiehlt sich, die biomedizinischen Materialien nach bekannten Verfahren durch Dialyse mit Wasser von Restmonomeren und Initiatorzerfallsprodukten zu befreien. Die Materialien werden anschließend getrocknet und können nach herkömmlichen Techniken der Thermoplastverarbeitung wie Spritzgießen, Kalandrieren, Pressen oder spanabhebende Bearbeitung zu Formkörpern, Folien, Schläuchen, Roh- und Halbzeugen etc. verarbeitet werden.

Auch die Herstellung von Duroplasten ist erfindungsgemäß möglich. Hierzu wird der Formkörper oder die Folie aus dem Polymer (A) geformt, dieses mit den Monomeren, die zusätzlich mehrfunktionelle, copolymerisierende Vinyl-Verbindungen enthalten, evtl. unter Zusatz von Initiator imprägniert und als Formkörper, Blockware oder Folie wie oben beschrieben der thermischen oder Lichteinwirkung ausgesetzt.

Die mehrfunktionellen, copolymerisierenden Vinylverbindungen führen zu einer vernetzenden Polymerisation. Die dabei resultierenden duroplastischen Materialien besitzen eine besonders hohe mechanische Festigkeit, insbesondere in der Wärme und erleiden bei der Hydratisierung nur geringe Formveränderungen. Vernetzend wirkende, mehrfunktionelle Vinylverbindungen sind u.a. Ethylenglykoldi(meth)acrylat, Diethylenglykol-di-(meth)acrylat, Tri- und Tetraethylenglykol-di(meth)acrylat, 1,4-Butandiol-di(meth)acrylat, Trimethylolpropan-di- und -tri-(meth)acrylat, Tripropylenglykol-di(meth)acrylat, 3-Methyl-1,5-pentandiol-di(meth)acrylat, Pentaerythrittri- und -tetra(meth)acrylat, Dihydrodicyclopentadienyl-mono(meth)acrylat, Vinyl(meth)acrylat, Pentaerythritacrylat, Butandioldivinylether, Divinylethylenharnstoff, Divinylpropylenharnstoff, Triallylcyanurat, Triallylisocyanurat, Divinyladipat, Diethylenglykol-diallylcarbonat, Umsetzungsprodukte von (Meth)acrylsäure mit Polyepoxid-Verbindungen wie z.B. mit Triglycidylisocyanurat, Triglycidylcyanurat oder Bisphenol-A-diglycidylether. Vorzügliche Vernetzer sind auch Divinylphthalat, Triallylisocyanurat, Triallylcyanurat und Divinylbenzol.

Vernetzend wirkende copolymerisierende Verbindungen sind auch Acrylsäure- oder Methacrylsäureallylester, Hydroxymethylnorbornen-(meth)acrylsäureester sowie Tricyclodecenylacrylat bzw. -methacrylat. Die erwähnten Vernetzer werden bevorzugt in Mengen von 0,5 bis 5 Gew.-% den wasserlöslichen Vinylmonomeren zugesetzt.

Die erfindungsgemäßen Materialien besitzen ein Wasseraufnahmevermögen von 2 bis 15 Gew.-% und bleiben selbst

in hydratisierter Form völlig transparent. Die Materialien finden z.B. Verwendung als Implantate in der Humanmedizin, für künstliche Gelenke, Blutgefäße, Ventile und Verschlüsse, Drainageschläuche etc. Wegen ihrer Transparenz finden die erfindungsgemäßen Materialien besonderes Interesse in der Augenmedizin, z.B. als implantierte Linsenkörper bei Linsenlosigkeit, als kontaktoptische Materialien, Skleralschalen, Korrekturkontaktlinsen etc. Aufgrund der gegenüber unmodifiziertem Celluloseester höheren Hydrophilie und besseren Benetzbarkeit mit Wasser, zeigen die erfindungsgemäßen Polymerblends bei ihrer Verwendung als Kontaktlinsenmaterial auch eine bessere Verträglichkeit mit lebendem Gewebe, einen höheren Tragekomfort und neigen weniger zur Beschlag- und Belagbildung als konventionelle unmodifizierte Celluloseester-Materialien.

Beispiel 1

Festphasenpolymerisation, s. Tabelle Nr. 1

In einer Glasflasche werden x g Celluloseacetobutyrat-EVA-Blend (A) in Zylindergranulat-Form, mit einem Hydroxylgehalt von 1,7 Gew.-%, einem Buttersäuregehalt von 46,5 Gew.-% (jeweils als gebundener Ester), bezogen auf Celluloseacetobutyrat-Komponente, und einem Gehalt von 10 Gew.-% EVA mit 70 Gew.-% eingebautem Vinylacetat, mit y g der wasserlöslichen Monomeren (B) und z g Initiator (C) gemischt, die Flasche druckdicht verschlossen und auf einer Walze über Nacht gerollt. Anschließend läßt man die Flasche 24 Stunden in einem Wärmeschrank von 40°C stehen. Das Granulat wird in Glasbombenrohre unter Stickstoff eingeschmolzen und in einem Ölbad erwärmt, bzw. dem Licht einer UV-Fluoreszenzröhre, wie sie käuflich für Sonnenbänke erwerbbar ist, ausgesetzt. Die Rohre werden geöffnet und die Wasseraufnahme durch 24-stündiges Lagern in dest. Wasser bestimmt.

Auf Quarzstempeln wurden aus dem Granulat, das in physiologischer Kochsalzlösung gewässert worden war, bei 160°C Kontaktlinsen gepreßt, die auf Kaninchenaugen aufgesetzt werden. Nach 40 Tagen ununterbrochenem Tragen wurde bei allen Materialien keine Vascularisation beobachtet (Gefäßeinsprossung), die Bindehaut blieb reizfrei. Im rechts-links-Versuch wurde bei ausgewählten Testpersonen der Tragekomfort gegen unbehandeltes Kontaktlinsenmaterial aus Celluloseacetobutyrat-Blend getestet. Bei 74 % der Testpersonen wurde eine subjekjektive bessere Verträglichkeit festgestellt. Gegenüber unbehandeltem Material zeigt sich vor allen Dingen bei Testpersonen, die zu einer starken Ablagerung auf halbharten Kontaktlinsen neigen, nach 4-wöchigem Gebrauch eine geringere Belagbildung, die jedoch mit herkömmlichen Kontaktlinsenreinigungsmitteln entfernbar ist. An der Spaltlampe beobachtete man gegenüber unmodifiziertem Material eine geringere Lichtstreuung. Kontaktlinsen aus diesem Material zeigen bei Autofahrern in der Nacht eine geringere Blendwirkung, was auf die geringere Lichtstreuung zurückzuführen ist.

Tabelle 1

| Versuche | x g (A) | y g (B) | z g (C) | Polymerisation (Stunden/°C) | Polymerisation durch UV-Licht (Stunden/30 °C) | Wasseraufnahme (Gew.-%) |
|---|---|---|---|---|---|---|
| a | 95 | 5 AOE | 0,025 AIBN | 16/90 | | 3,0 |
| b | 90 | 10 AOE | 0,050 AIBN | 16/90 | | 4,5 |
| c | 85 | 15 AOE | 0,075 tBPO | 24/110 | | 4,7 |
| d | 95 | 5 AOB, 0,05 EGDM | 0,025 BIP | | 48 | 3,0 |
| e | 85 | 15 VP | 0,075 tBPO | 24/110 | | 4,2 |
| f | 95 | 5 AOE | 0,025/tBPO | 24/110 | | 2,5 |

AOE: Acrylsäure-2-hydroxyethylester
AOP: Acrylsäure-2-hydroxypropylester
AOB: Acrylsäure-4-hydroxybutylester
EGDM: Ethylenglykol-dimethacrylat
VP: Vinylpyrrolidon
AEOE: Acrylsäure-2-ethoxyethylester
tBPO: tert.-Butylperoctoat
AIBN: Azodiisobuttersäure-dinitril
BIP: Benzoinisopropylether

Beispiel 2

Schmelzpolymerisation

Auf einer 1 Wellen-Laborschnecke (Brabender Plastograf) werden stündlich 2 kg Celluloseacetobutyrat-Blend der Zusammensetzung wie im Beispiel 1 eingezogen und aufgeschmolzen. Hinter der Einzugszone werden bei 180°C stündlich ein Gemisch aus 0,25 kg Acrylsäure-4-hydroxybutylester (1,4-Butandiol-monoacrylat) mit 5 g Di-tert.-Butylperoxid über eine Kolbenpumpe eingepumpt.

Die weiteren Schneckenabschnitte wurden auf 220°C geheizt. Die austretende Schmelze wurde zu einem Strang gezogen, abgekühlt und granuliert. Das Wasseraufnahmevermögen betrug 4,2 Gew.-%. Kontaktlinsen aus diesem Material bestanden den 40 Tage-Kaninchentest und zeigten im Humantest ebenfalls eine bessere subjektive Verträglichkeit und an der Spaltlampe eine geringere Lichtstreuung als das unmodifizierte Material.

Beispiel 3

Festphasenpolymerisation, s. Tabelle 2

In einer Glasflasche werden x g Celluloseacetobutyrat (A) in Zylindergranulat-Form mit einem Hydroxylgehalt von 1,7 Gew.-%, einem Buttersäuregehalt von 46,5 Gew.-% und einem Essigsäuregehalt von 20 Gew.-% (jeweils als

gebundener Ester) mit y g der wasserlöslichen Monomeren (B) und z g Initiator (C) gemischt, die Flasche druckdicht verschlossen und auf einer Walze über Nacht gerollt. Anschließend läßt man die Flasche 24 Stunden in einem Wärmeschrank von 40°C stehen. Das Granulat wird in Glasbombenrohre unter Stickstoff eingeschmolzen und in einem Ölbad erwärmt, bzw. dem Licht einer UV-Fluoreszenzröhre, wie sie käuflich für Sonnenbänke erwerbbar ist, ausgesetzt. Die Rohre werden geöffnet und die Wasseraufnahme durch 24-stündiges Lagern in dest. Wasser bestimmt.

Auf Quarzstempel wurden aus dem Granulat, das in physiologischer Kochsalzlösung gewässert worden war, bei 160°C Kontaktlinsen gepreßt, die auf Kaninchenaugen aufgesetzt wurden. Nach 40 Tagen ununterbrochenem Tragen wurde bei allen Materialien keine Vascularisation beobachtet, die Bindehaut blieb reizfrei. Im rechts-links-Versuch wurde bei ausgewählten Testpersonen der Tragekomfort gegen unbehandeltes Kontaktlinsenmaterial aus Celluloseacetobutyrat getestet. Bei 74 % der Testpersonen wurde eine subjektive bessere Verträglichkeit festgestellt. Gegenüber unbehandeltem Material zeigte sich vor allen Dingen bei Testpersonen, die zu einer starken Ablagerung auf halbharten Kontaktlinsen neigen, nach 4-wöchigem Gebrauch eine nur geringe Belagbildung, die mit herkömmlichen Kontaktlinsenreinigungsmitteln entfernbar ist.

Tabelle 2

| Versuche | x g (A) | y g (B) | z g (C) | Polymerisation (Stunden/°C) | Polymerisation durch UV-Licht (Stunden/30 °C) | Wasseraufnahme (Gew.-%) |
|---|---|---|---|---|---|---|
| a | 95 | 5 AOE | 0,025 AIBN | 16/90 | | 2.7 |
| b | 90 | 10 AOE | 0,050 AIBN | 16/90 | | 4.2 |
| c | 85 | 15 AOP | 0,075 tBPO | 24/110 | | 4.3 |
| d | 95 | 5 AOB,<br>0,05 EGDM | 0,025 BIP | | 48 | 2.1 |
| e | 85 | 15 VP | 0,075 tBPO | 24/110 | | 2.8 |
| f | 95 | 5 AEOE | 0,025 tBPO | 24/110 | | 1.8 |

AOE: Acrylsäure-2-hydroxyethylester
AOP: Acrylsäure-2-hydroxypropylester
AOB: Acrylsäure-4-hydroxybutylester
EGDM: Ethylenglykol-dimethacrylat
VP: Vinylpyrrolidon
AEOE: Acrylsäure-2-ethoxyethylester
tBPO: tert.-Butylperoctoat
AIBN: Azodiisobuttersäure-dinitril
BIP: Benzoinisopropylether

Beispiel 4

Schmelzpolymerisation

Auf einer 1 Wellen-Laborschnecke (Brabender Plastograf) wurden stündlich 2,5 kg Celluloseacetobutyrat der Zusammensetzung wie im Beispiel 3 eingezogen und aufgeschmolzen. Hinter der Einzugszone wurden bei 180°C stündlich ein Gemisch aus 0,25 kg Acrylsäure-4-hydroxybutylester (1,4-Butandiol-monoacrylat) und 5 g Di-tert.-Butylperoxid über eine Kolbenpumpe eingepumpt. Die weiteren Schneckenabschnitte wurden auf 220°C geheizt. Die austretende Schmelze wurde zu einem Strang gezogen, abgekühlt und granuliert. Das Wasseraufnahmevermögen betrug 3.8 Gew.-%. Kontaktlinsen aus diesem Material bestanden 40 Tage Kaninchenaugentest und zeigten im Humantest eine bessere subjektive Verträglichkeit als nichtmodifiziertes Material.

Patentansprüche

1) Polymerblend, bestehend aus

(A) 98-80 Gew.-% eines Celluloseesters einer aliphatischen Carbonsäure, der gegebenenfalls bis zu 40 Gew.-%, bezogen auf gesamte Komponente (A), eines Ethylen-Vinylacetat-Copolymeren mit 30 bis 98 Gew.-%, bezogen auf EVA, eingebautem Vinylacetat enthält und

(B) 2-20 Gew.-% eines Homo- oder Copolymerisats aus wasserlöslichen Vinylmonomeren sowie gegebenenfalls bis zu 10 Gew.-%, bezogen auf das gesamte Polymerisat (B), an mehrfunktionellen Vinylverbindungen als Vernetzer.

2) Polymerblend nach Anspruch 1, dadurch gekennzeichnet, daß Komponente (A) aus reinem Celluloseester besteht.

3) Polymerblend nach Anspruch 1, dadurch gekennzeichnet, daß Komponente (A) ein Blend aus

99 bis 70 Gew.-% Celluloseester und
30 bis 1 Gew.-% Ethylen-Vinylacetat-Copolymer

ist.

4) Polymerblend nach Anspruch 3, dadurch gekennzeichnet, daß Komponente (A) ein Blend aus

0115633

95 bis 85 Gew.-% Celluloseester und
15 bis 5 Gew.-% Ethylen-Vinylacetat-Copolymer

ist.

5) Polymerblend nach Ansprüchen 1 bis 4, dadurch gekennzeichnet, daß der Celluloseester ein Celluloseacetobutyrat, enthaltend

30 bis 50 Gew.-% Buttersäure,
10 bis 26 Gew.-% Essigsäure und
0,7 bis 1,95 Gew.-% Hydroxylgruppen

ist.

6) Polymerblend nach Anspruch 1 sowie Ansprüchen 3 bis 5, dadurch gekennzeichnet, daß das Ethylen-Vinylacetat-Copolymer einen Vinylacetatgehalt von 60 bis 80 Gew.-% hat.

7) Polymerblend nach Ansprüchen 1 bis 6, dadurch gekennzeichnet, daß die wasserlöslichen Vinylmonomeren aus der Gruppe Vinylpyrrolidon und Verbindungen der allgemeinen Formel

$$H_2C=\overset{R}{\overset{|}{C}}-\overset{O}{\overset{\|}{C}}-O-A-OR'$$

ausgewählt sind, wobei
R für H oder $CH_3$ steht,
R' H, $CH_3$ oder $C_2H_5$ bedeutet und
A einen gegebenenfalls verzweigten Alkylenrest mit 1 bis 4 C-Atomen darstellt.

8) Verfahren zur Herstellung von Polymerblends nach Ansprüchen 1 bis 7, dadurch gekennzeichnet, daß man

98 bis 80 Gew.-% der Komponente (A) mit
2 bis 20 Gew.-% eines wasserlöslichen Vinylmonomeren, gegebenenfalls unter Zusatz von
0,01 bis 0,5 Gew.-% eines Radikalinitiators,

imprägniert und anschließend das imprägnierte Material in fester Form oder in der Schmelze einer Temperatur von 60 bis 220°C und/oder einer Lichteinwirkung aussetzt.

9) Verwendung von Polymerblends nach Ansprüchen 1 bis 7 für mit lebendem Gewebe in Kontakt kommende Materialien in der Tier- und Humanmedizin oder in der Kontaktoptik.

10) Kontaktlinsen und -schalen, bestehend aus einem Polymerblend nach Ansprüchen 1 bis 7.

Europäisches Patentamt

**EUROPÄISCHER RECHERCHENBERICHT**

0115673

Nummer der Anmeldung

EP 83 11 3115

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 231 905 (CHARLES W. NEEFE) * Ansprüche * | 1,2,5, 9,10 | C 08 F 251/02<br>C 08 L 1/10<br>G 02 C 7/04<br>(C 08 F 251/02<br>C 08 F 220/26 )<br>(C 08 L 1/10<br>C 08 L 31/04<br>C 08 L 33/06 ) |
| Y | FR-A-2 309 573 (EASTMAN KODAK) * Seite 2, Zeilen 20-30; Ansprüche * | 1,7-10 | |
| Y | FR-A-2 343 759 (RESEARCH CORP.) * Seite 3, Zeilen 28-35; Seite 6, Zeilen 9-18 * | 1,7-10 | |
| A | US-A-4 263 183 (RONALD R. LIGHT) | | |
| A | EP-A-0 003 971 (BAYER) | | |
| | | | RECHERCHIERTE SACHGEBIETE (Int. Cl. 3)<br>C 08 L<br>C 08 F |

Der vorliegende Recherchenbericht wurde für alle Patentansprüche erstellt.

| Recherchenort | Abschlußdatum der Recherche | Prüfer |
|---|---|---|
| DEN HAAG | 16-04-1984 | LENSEN H.W.M. |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82